# EUROPÄISCHE PATENTSCHRIFT

(11) **EP 3 674 068 B1**
(45) Veröffentlichungstag und Bekanntmachung des Hinweises auf die Patenterteilung: **06.10.2021**
(21) Anmeldenummer: 19217423.3
(22) Anmeldetag: 18.12.2019
(51) Int. Cl.: B29C 70/46, B29C 70/44, B29D 99/00, B29C 43/20, B29L 31/30, B29C 43/36

(54) **VERFAHREN ZUM ADAPTIVEN FÜLLEN VON STARREN WERKZEUG-KAVITÄTEN**
METHOD FOR ADAPTIVELY FILLING RIGID TOOL CAVITIES
PROCÉDÉ DE REMPLISSAGE ADAPTATIF DES CAVITÉS RIGIDES D'OUTILS

(30) Priorität: 30.12.2018 LU 101087
(43) Veröffentlichungstag der Anmeldung: 01.07.2020
(73) Patentinhaber: Airbus Operations GmbH, 21129 Hamburg (DE)
(72) Erfinder: Kako, Jan-Christoph, 21129 Hamburg (DE)

(56) Entgegenhaltungen:
- US-A1- 2002 027 187
- US-A1- 2014 203 477

## Beschreibung

### Gebiet der Erfindung

Die Erfindung betrifft ein Verfahren zum adaptiven Füllen von starren Werkzeugkavitäten, insbesondere bei der Herstellung von T-förmigen Verstärkungselementen aus Faserverbundwerkstoff.

### Hintergrund der Erfindung

Heutzutage werden insbesondere in der Luftfahrtindustrie Verbundwerkstoffe mit einer organischen Matrix und Endlosfasern aus CFK (Kohlefaserverstärkter Kunststoff) in einer Vielzahl von Strukturelementen eingesetzt. Auch Flügel, Leitwerke, Rumpfschalen, Ruder, Stör- oder Steuerklappen können unter Verwendung von CFK hergestellt werden. Ein bekanntes Verfahren zur Herstellung dieser Elemente verwendet die Prepreg-Technik. In einem ersten Schritt erfolgt ein flacher Aufbau von Verbund-Prepreg-Lagen für jedes Element. Dann wird mittels eines klassischen Warmumformprozesses oder eines Pressformverfahrens eine laminierte Vorform des Elements mit der erforderlichen Form hergestellt. Anschließend wird der laminierte Vorformling ausgehärtet.

Die Erfindung betrifft ein Verfahren zum adaptiven Füllen von starren Werkzeugkavitäten, insbesondere bei der Herstellung von T-förmigen Verstärkungselementen aus Faserverbundwerkstoff, so genannten Stringern und Spanten. Solche T-förmigen Verstärkungselemente können hergestellt werden, indem der T-förmige Vorformling auf die zu verstärkende Struktur, beispielsweise ein Hautfeld, aufgesetzt wird. Anschließend werden im Wesentlichen winkelförmige Formwerkzeuge entlang der Längsachse des Vorformlings positioniert, so dass der rechtwinklig zur zu verstärkten Struktur angeordnete Teil des Vorformlings beiderseits von diesen Werkzeugen fixiert und eingeklemmt sowie oberseitig umschlossen wird. Vorformling und Aushärtewerkzeuge werden gemeinsam im Autoklaven ausgehärtet. Nachdem Entfernen der Werkzeuge erhält man den ausgehärteten Stringer. Dieser stellt ein negatives Abbild der verwendeten Formwerkzeuge dar.

Eine Verringerung der ausgehärteten Abmessungen der Stringer bei der Herstellung mit solchen hart umschließenden Werkzeugen erfordert eine Modifizierung dieser Werkzeuge, da der ansonsten resultierende Hohlraum in diesem Werkzeug mit Teilen des Teils gefüllt wird, die zu Qualitätsproblemen führen (z. B. Porositäten und Faserfehlausrichtungen aufgrund des Drucks) Gradient und mangelnde Konsolidierung im Teil). Solche unerwünschten Erhebungen auf der Bauteil Oberfläche können den optischen Eindruck des Bauteils schmälern, haben keine technische Funktion und führen zu unnötigem und vermeidbaren Gewicht des Bauteils. Das überschüssige Material kann mechanisch durch Schleifen oder Fräsen entfernt werden. Dies ist ein aufwendiger und unnötiger Prozessschritt. Es besteht daher der Wunsch, solche Nacharbeiten auf Bauteilen aus kohlefaserverstärkten Kunststoffen oder anderen Faserverbundwerkstoff Bauteilen zu vermeiden.

Modifikationen des metallischen Werkzeughohlraums werden normalerweise mit Metallbearbeitungstechniken durchgeführt. Neben der Wiederaufbereitung von Teilen wird in der Regel nach Möglichkeit entweder ein Nachfräsen vorgenommen oder bei größeren Änderungen können Passeinsätze eingesetzt (verschraubt oder geschweißt) werden. Bei geringfügigen Modifikationen (10 mm) wird häufig auch eine (Laser-) Oberflächenbeschichtung angewendet.

Neben einer Werkzeugmodifikation werden häufig Einweg- oder wiederverwendbare Füllstücke verwendet, hauptsächlich aus einem gummiartigen Material. Dies führt in der Regel zu Problemen mit den Herstellungs- und Handhabungskosten dieser Teile und der geringen Lebensdauer, die sie sicher und ohne Qualitätsverlust anwenden können.

Ein modifizierter Prozess ermöglicht das Entfernen der Werkzeuge aus dem Inneren des Vakuumbeutels nach außen und die Herstellung der Teile, ohne das Teil vollständig einzuschließen (Prinzip der "Direktverpackung"). Die Anwendung dieses Verfahrens ist jedoch nicht ohne Probleme, es erfordert eine erneute Beurteilung der Teilegüte, insbesondere wenn die inhärente Krümmung des Teils zu einer Längskompression der Stringerbahn während der Produktion führt. Dann erlauben die spezifischen Herstellungsbedingungen eines vollständig umschlossenen harten Werkzeugs ein resultierendes Teil mit einer besseren Faserausrichtung.

Die Schrift US 2002/027187 A1 offenbart ein Hilfswerkzeug für ein Paar Formwerkzeuge zum Formen einer Struktur aus faserverstärktem Kunststoff unter Druck und Hitze, welches zwischen dem Paar Formwerkzeuge angeordnet werden kann.

Ausgehend von all dem fehlte es an einem Verfahren, dass die Verwendung starrer Aushärtewerkzeuge und die damit verbundene hohe Bauteilqualität erlaubt und dennoch Anpassungen an der Bauteilgeometrie, insbesondere der Höhe ermöglicht.

### Beschreibung der Erfindung

Überraschend und für den Fachmann nicht vorhersehbar hat sich nun herausgestellt, dass ein Verfahren zur Herstellung von versteiften Bauteilen aus Faserverbundwerkstoff umfassend die Schritte
- Bereitstellen eines zu verstärkenden Bauteils 1,
- Ablegen von zur Bildung eines T-förmigen Verstärkungselements vorgeformter Verstärkungsfasern 2 auf diesem zu verstärkenden Bauteil 1,
- Bereitstellen von zwei starren Formwerkzeugen 3 und 4, die geeignet sind die längeren Stirnseiten der T-förmig vorgeformten Verstärkungsfasern 2 zu bedecken,
- Einlegen eines gefalteten Schlauchkerns 7 in die starren Formwerkzeuge 3 und 4,
- Positionieren der starren Formwerkzeugen 3 und 4 auf den längeren Stirnseiten der T-förmig vorgeformten Verstärkungsfasern 2 so, dass der gefaltete Schlauchkern 7 oberhalb der vom zu verstärkenden Bauteil 1 weg weisenden Stirnseite der vorgeformten Verstärkungsfasern 2 zu liegen kommt,
- Anpressen der starren Formwerkzeuge 3 und 4 an die vorgeformten Verstärkungsfasern 2,
- Aufblasen des Schlauchkerns 7, so dass auf die vom zu verstärkenden Bauteil 1 weg weisende Stirnseite der vorgeformten Verstärkungsfasern 2 ein Druck ausgeübt wird,
- Konsolidieren der Verstärkungsfasern,
den Nachteilen des Standes der Technik abhilft.

Das vorgeschlagene Verfahren hat den Vorteil einer kostengünstigen Lösung, um die Werkzeugkavität an das tatsächliche Teil anzupassen, ohne die negativen Auswirkungen eines komplexen, stark kontrollierten Prozesses oder der unkontrollierten Wirkung des Drucks im Autoklav auf die Oberkante des Stringers.

Es können niedrigere Stringerhöhen ohne vollständige Überholung der vorhandenen Werkzeuge realisiert werden ohne auf materialintensives Besäumen angewiesen zu sei, denn dabei würde einfach ein Teil des Stringers nachträglich entfernt, was zu einer Erhöhung des Abfallaufkommens führt.

Darüber hinaus ist dieses Verfahren geeignet, um der Bauteilekante definiert Material hinzu zu geben, was zu einem nahezu endformnahen Prozess führt; abhängig von Kantenfläche und Positionstoleranzen kann jedoch ein späteres Beschneiden des Zusatzmaterials erforderlich sein. Das eingesetzte Strukturmaterial kann sehr weitgehend ausgenutzt werden. Das hinzugefügte Material kann zusätzliche Funktionen übernehmen, etwa als galvanischer Korrosionsschutz oder Kantenaufprallschutz.

Ein Aspekt der Erfindung ist die Anwendung eines gefalteten kreisförmigen Filmprofils innerhalb des geschlossenen Formhohlraums des Stringer-Werkzeugs in dem speziellen Fall, dass das Stringer-Laminat den Hohlraum im Querschnitt nicht vollständig ausfüllt.

Das Rohrprofil besteht aus einem geschlossenen Rohrprofil, das für einen minimalen Querschnitt gefaltet ist, um das Einführen in das Aushärtewerkzeug zu vereinfachen. Nach dem Aufblasen füllt das Profil den gesamten Hohlraum im Aushärtewerkzeug.

Nach der Positionierung der Verstärkungselemente (Stringer) ist der übliche nächste Schritt die Vorbereitung des Vakuumbeutels. In diesem Prozessschritt muss das offene Ende mit einem Verteilerrohrsystem verbunden werden, das eine zusätzliche Verbindung vom Grundwerkzeug zum äußeren Anschlussstutzen bietet.

Nachdem der endgültige Vakuumaufbau abgeschlossen ist und der Vakuumbeutel dicht ist und Vakuum angelegt wird, wird das System mit den gefalteten Profilen unmittelbar vor Beginn des Aushärtungszyklus mit minimalem Differenzdruck aufgeblasen, so dass der Hohlraum ohne übermäßige Kraftanwendung gefüllt wird.

Der Gesamtprozess während des Aushärtungszyklus ist in verschiedene Phasen unterteilt. In der ersten Vorhärtungsphase wird das Rohrprofil vor oder gleichzeitig mit dem Vakuumbeutel evakuiert. Dies geschieht, um eine optimale Entleerung des gesamten Teils zu ermöglichen, bevor die Aushärtung beginnt.

Nachdem diese Evakuierung beendet ist, wird das Rohrprofil mit einem leichten Differenzüberdruck auf das Innendruckniveau des Beutels aufgeblasen. In diesem Fall entfaltet sich das Profil und füllt den verbleibenden Hohlraum. Wenn zusätzliches Material zur Kantenabdeckung aufgebracht wird, wird dieses nun aufgrund der vollständigen Entleerung des Teils an die Teilekante gepresst. Die Verbindung dieses Materials kann ohne Lufteinschlüsse erfolgen und gewährleistet eine gute Verbindung.

Der Innendruck des Profils muss basierend auf den spezifischen Anforderungen der Teile bestimmt werden. Es wird ausgewogen zwischen den negativen Auswirkungen einer zu hohen Druckanwendung auf die Teilkante und der Einschränkung des Harzflusses von dem Teil. Es muss nicht unbedingt unter dem Umgebungsdruck p0 liegen.

Nachdem das Strukturmaterial einen ausreichenden Aushärtungsgrad erreicht hat, kann der innere Profildruck auf den äußeren Aushärtungsdruck p1 erhöht oder auf Umgebungsniveau entspannt werden.

Bevorzugt ist es, wenn der Schlauchkern aus Kunststofffolie besteht, bevorzugt aus Polyamid. Ebenfalls bevorzugt ist es, wenn der Schlauchkern aus Silkon besteht. Weiter bevorzugt ist es, wenn der Schlauchkern antihaftbeschichtet ist oder ein Trennmittel seine Oberfläche zumindest teilweise bedeckt. Weiter bevorzugt ist es, wenn der Schlauchkern antihaftbeschichtet ist oder ein Trennmittel seine Oberfläche zumindest teilweise bedeckt.

Das Profil kann aus luftdichtem Material mit Betriebstemperaturen oberhalb der Härtungstemperatur und Beständigkeit gegenüber den ungehärteten Harzsystemen hergestellt werden. Die gleichen Anforderungen gelten für klassisches Vakuumbeutelmaterial; Dies wird normalerweise mit Polyamidfolien gelöst. Die Freigabefähigkeit des Materials ist optional erwünscht, aber nur erforderlich, wenn Endkontur-Designs ohne nachträgliches Beschneiden verwendet werden. Zu diesem Zweck kann mehrschichtiges Material mit Trennfähigkeit verwendet werden. Alternativ kann ein zusätzlicher Streifen aus Trennmaterial, der nur den später ausgehärteten Teil bedeckt, um das Rohrprofil gewickelt werden Wenn eine steifere Version dieses Zusatzmaterials gewählt wird, kann Sie eine glattere Oberfläche der ausgehärteten Kante erzeugt werden.

Ein gummiartiger Schlauch (z. B. Silikon) kann angewendet werden, muss jedoch unter den gleichen geometrischen Gesichtspunkten (Gesamtumfang nach Entfalten > Umfang des Hohlraums) entworfen werden, da das Aufblasen des Hohlraums nicht zu einem Spannungszustand des Materials führen sollte.

Es ist bevorzugt, wenn in die starren Formwerkzeuge 3 und 4 zusätzlich ein aushärtbares Material 9 zwischen Schlauchkern 7 und Verstärkungsfasern 2 eingebracht wird. Besonders bevorzugt ist es wenn das aushärtbare Material 9 in ausgehärteter Form einen Schutz vor elektrolytischer Korrosion bietet und/oder Indikatoreigenschaften aufweist, besonders bevorzugt weist das aushärtbare Material Indikatoreigenschaften hinsichtlich Aufprallereignissen auf. Eine weitere Perspektive ist die Hinzufügung eines Materials zu dem Profil, das im Prozess mit der Teilekante verbunden werden soll. Es kann jede Art von anpassungsfähigem Material (z. B. ungehärtet oder weich) hinzugefügt werden, um eine Kante mit einstellbaren Eigenschaften zu ermöglichen.

Im Falle von Flugzeugflügelstringern, z.B. die Zugabe einer ungehärteten Harzpaste auf dem Rohrelement ermöglicht das Abdecken der Bauteilkante mit dem normalerweise gewünschten galvanischen Korrosionsschutz und kann auch als Aufprallerkennungs- / -schutzmaterial wirken, wodurch der Randaufprall leichter sichtbar wird. Aufprallschäden wirken sich auf die Tragfähigkeit des Materials im Strukturstringer aus, ein kritischer Punkt ist dabei die frühzeitige Erkennbarkeit der Schäden. Eine Vielzahl von Materialien kann für diese Anwendung möglich sein. In den meisten Fällen ist eine Epoxidpaste oder ein Epoxidschaummaterial (z. B. Spleißfüller für die Wabenanwendung) verwendbar, um eine gute Kompatibilität mit einem strukturellen Verbundmaterial und die Fähigkeit zu erzielen, einen unebenen Rand eines Teils vollständig auszufüllen, was das Ergebnis der bekannten Verarbeitung ist, beispielsweise bei Tragflügeln im vorgehärteten Zustand.

Während die Integration des galvanischen Schutzes - auch das getrimmte Füllmaterial weist die elektrischen Isoliereigenschaften auf - zu einer Verringerung der Herstellungskosten führt, kann die Verbesserung des Kantenaufprallverhaltens auch das erforderliche strukturelle Gewicht des Bauteils erheblich reduzieren.

Weiter ist es bevorzugt, wenn die Verstärkungsfasern trockene Kohlenstoffasern sind. Weiter ist es bevorzugt, wenn die Verstärkungsfasern mit Matrixharz vorimprägnierte Kohlenstoffasern sind. Die Offenbarung umfasst auch ein Bauteil für ein Flugzeug. Dieses Bauteil ist nicht Teil der beanspruchten Erfindung.

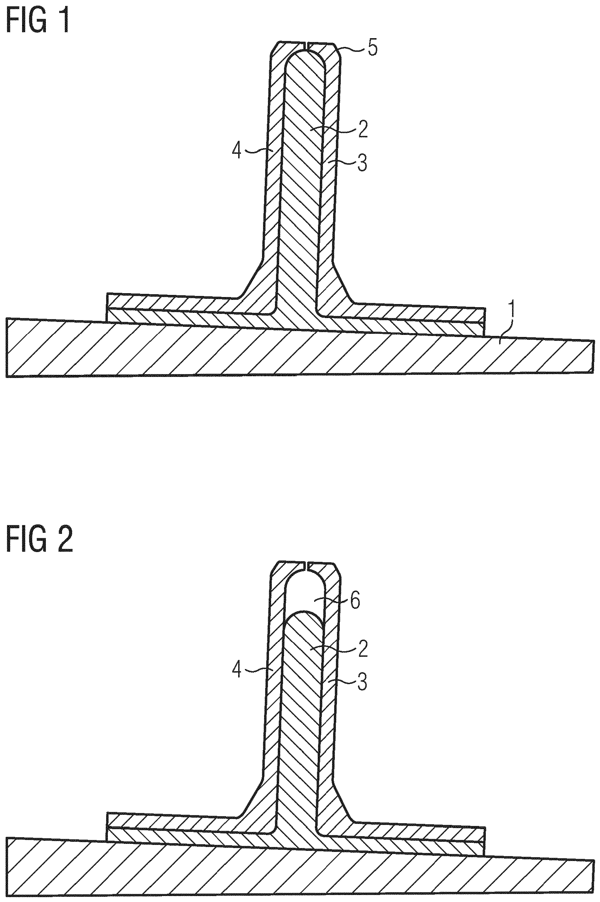

Figur 1 zeigt einen herkömmlichen Aufbau zur Herstellung eines Verstärkungsprofils mit Aushärteformen. Dabei wird auf die zu verstärkende Struktur 1 das vorgeformte Verstärkungsmaterial 2 aufgebracht und von zwei harten im Wesentlichen winkelförmigen Aushärteformen 3 und 4 eingeschlossen. Diese Formen 3 und 4 weisen einen im Wesentlichen zur zu verstärkenden Struktur 1 parallelen ersten Schenkel, einen daran anschließenden zweiten Schenkel, der zur zu verstärkenden Struktur 1 grob senkrecht steht und einen daran anschließenden dritten Schenkel, dessen Stirnflächen eine Berührungsfläche der Formen 3 und 4 sind, auf. Die beiden Formen 3 und 4 können eine Kavität bilden, innerhalb derer das vorgeformte Verstärkungsmaterial 2 eingebracht sein kann. Die gesamte Anordnung wird mit einer Vakuumfolie 5 abgedeckt. Durch Anlegen von Vakuum wird das Fasermaterial 2 mithilfe der Aushärteformen 3 und 4 komprimiert. Das aushärtbare Matrixmaterial konsolidiert durch sein Aushärten die Verstärkungsfasern und fixierten den fertigen Stringer auf dem zu verstärken Bauteil 1. Das Aushärten kann im Autoklaven erfolgen, also unter Druck und erhöhter Temperatur.
Figur 2 zeigt eine nicht erfindungsgemäße Anordnung zur Konsolidierung von T-förmigen Verstärkungsprofilen. Dabei sind die winkelförmigen Aushärteformen 3 und 4 so ausgebildet, dass oberhalb des eingelegten Verstärkungsmaterials 2 ein Hohlraum 6 entstehen kann, wenn die Abmessungen des Verstärkungsmaterials entsprechend bemessen sind. Solche Aushärteformen erlauben es T-förmige Verstärkungsprofile mit unterschiedlicher Länge des senkrecht zur verstärkenden Struktur stehenden Schenkels herzustellen. Allerdings kann es an der Oberkante des Verstärkungsmaterials 2 zu einer abweichenden Materialqualität und Oberflächengüte kommen.

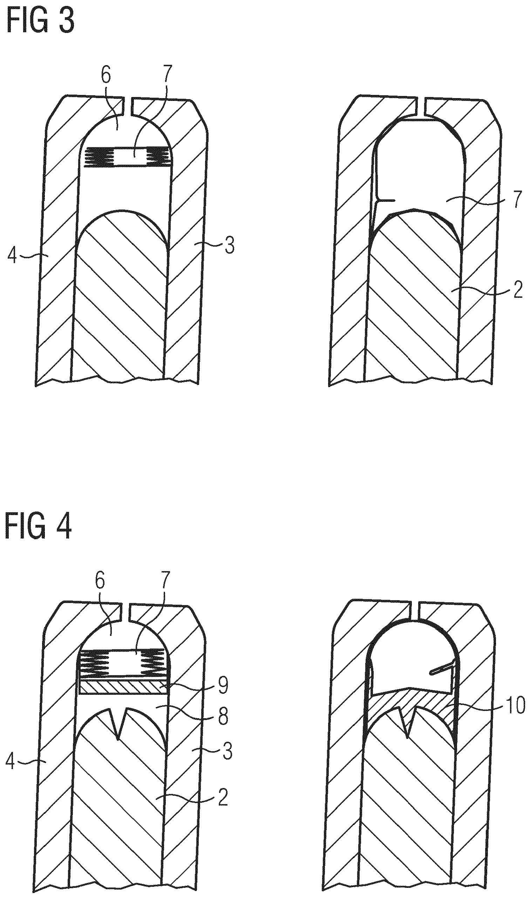

Figur 3 zeigt das innerhalb der Kavität 6 liegende aufblasbare und gefaltete schlauchförmige Profil 7. Solche schlauchförmige Profile können auch als Schlauchkerne bezeichnet werden. Zu Beginn des Aushärtungszyklus ist das schlauchförmige Profil 7 so gefaltet, dass es ein geringes Volumen innerhalb der Kavität 6 einnimmt. Das schlauchförmige Profil ist aufblasbar ausgeführt. Durch Aufblasen des schlauchförmigen Profils 7 kann innerhalb des Aushärtewerkzeuges 3 und 4 die Kavität 6 ausfüllen und es kann ein stirnseitiger Druck auf die Verstärkungsfasern ausgeübt werden. So kann die Oberflächengüte an der Stirnseite des Verstärkungsmaterials 2 verbessert werden und das Austreten von Harz in die Kavität 6 verhindert werden.
Figur 4 zeigt eine weitere Ausführungsform des erfindungsgemäßen Verfahrens, bei dem in die Kavität 6 das schlauchförmige Profil 7 so eingebracht wird, dass zwischen Profil 7 und Verstärkungsfasern 2 ein Hohlraum 8 frei bleibt. In diesen Hohlraum 8 kann weiteres aushärtbares Material 9 eingebracht werden. Beim Aufblasen des schlauchförmigen Profils 7 wird das aushärtbare Material 9 auf die Stirnseite der Verstärkungsfasern 2 gepresst, so dass dessen Stirnseite mit dem konsolidierten Material 10 beschichtet wird.

Es wird angemerkt, dass beschriebenen Ausführungsformen lediglich illustrative und nicht beschränkend sind. Während die Erfindung illustriert und beschrieben wurde im Detail in den Beispielen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist. In den Ansprüchen schließt das Wort "aufweisend" nicht andere Elemente aus und der unbestimmte Artikel "ein" schließt eine Mehrzahl nicht aus.

### Bezugszeichenliste

- 1: zu verstärkende Struktur
- 2: Verstärkungsmaterial
- 3: Aushärtform oder starres Formwerkzeug
- 4: Aushärtform oder starres Formwerkzeug
- 5: Vakuumfolie
- 6: Kavität
- 7: schlauchförmiges Profil
- 8: Hohlraum
- 9: weiteres aushärtbares Material
- 10: konsolidiertes Material

## Patentansprüche

1. Verfahren zur Herstellung von versteiften Bauteilen aus Faserverbundwerkstoff umfassend die Schritte
- Bereitstellen eines zu verstärkenden Bauteils (1),
- Ablegen von zur Bildung eines T-förmigen Verstärkungselements vorgeformter Verstärkungsfasern (2) auf diesem zu verstärkenden Bauteil (1),
- Bereitstellen von zwei starren Formwerkzeugen (3, 4), die geeignet sind die längeren Stirnseiten der T-förmig vorgeformten Verstärkungsfasern (2) zu bedecken,
- Einlegen eines gefalteten Schlauchkerns (7) in die starren Formwerkzeuge (3, 4),
- Positionieren der starren Formwerkzeugen (3, 4), auf den längeren Stirnseiten der T-förmig vorgeformten Verstärkungsfasern (2) so, dass der gefaltete Schlauchkern (7) oberhalb der vom zu verstärkenden Bauteil (1) weg weisenden Stirnseite der vorgeformten Verstärkungsfasern (2) zu liegen kommt,
- Anpressen der starren Formwerkzeuge (3, 4), an die vorgeformten Verstärkungsfasern (2),
- Aufblasen des Schlauchkerns (7), so dass auf die vom zu verstärkenden Bauteil (1) weg weisende Stirnseite der vorgeformten Verstärkungsfasern (2) ein Druck ausgeübt wird,
- Konsolidieren der Verstärkungsfasern.

2. Verfahren nach einem der vorangehenden Ansprüche **dadurch gekennzeichnet, dass** in die starren Formwerkzeuge (3, 4), zusätzlich ein aushärtbares Material (9) zwischen Schlauchkern (7) und Verstärkungsfasern (2) eingebracht wird.

3. Verfahren nach Anspruch 2 **dadurch gekennzeichnet, dass** das aushärtbare Material (9) in ausgehärteter Form einen Schutz vor elektrolytischer Korrosion bietet.

4. Verfahren nach einem der Ansprüche 2 bis 3 **dadurch gekennzeichnet, dass** das aushärtbare Material (9) in ausgehärteter Form Indikatoreigenschaften aufweist.

5. Verfahren nach einem der Ansprüche 2 bis 4 **dadurch gekennzeichnet, dass** der Schlauchkern aus Kunststofffolie besteht, bevorzugt aus Polyamid.

6. Verfahren nach einem der Ansprüche 2 bis 5 **dadurch gekennzeichnet, dass** der Schlauchkern aus Silkon besteht.

7. Verfahren nach einem der Ansprüche 2 bis 6 **dadurch gekennzeichnet, dass** der Schlauchkern antihaftbeschichtet ist oder ein Trennmittel seine Oberfläche zumindest teilweise bedeckt.

8. Verfahren nach einem der Ansprüche 2 bis 7 **dadurch gekennzeichnet, dass** die Verstärkungsfasern trockene Kohlenstoffasern sind.

9. Verfahren nach einem der Ansprüche 2 bis 8 **dadurch gekennzeichnet, dass** die Verstärkungsfasern mit Matrixharz vorimprägnierte Kohlenstoffasern sind.

## Claims

1. Method of manufacturing stiffened components from fibre composite material comprising the steps of
- providing a component (1) to be reinforced,
- depositing reinforcing fibres (2) preformed to form a T-shaped reinforcing element on this component (1) to be reinforced,
- providing two rigid forming tools (3, 4) suitable for covering the longer ends of the T-shaped preformed reinforcing fibres (2),
- inserting a folded tubular core (7) into the rigid forming tools (3, 4),
- positioning the rigid forming tools (3, 4) on the longer end faces of the T-shaped preformed reinforcing fibres (2) in such a way that the folded tubular core (7) comes to lie above the end face of the preformed reinforcing fibres (2) facing away from the component (1) to be reinforced,
- pressing the rigid forming tools (3, 4) against the preformed reinforcing fibres (2),
- inflating the tubular core (7) so that pressure is exerted on the end face of the preformed reinforcing fibres (2) facing away from the component (1) to be reinforced,
- consolidating the reinforcing fibres.

2. Method according to one of the preceding claims, **characterized in that** a curable material (9) is additionally introduced into the rigid forming tools (3) and (4) between the tubular core (7) and the reinforcing fibres (2).

3. Method according to claim 2, **characterised in that** the curable material (9) in cured form provides protection against electrolytic corrosion.

4. The method according to any one of claims 2 to 3, **characterized in that** the curable material (9) in cured form has indicator properties.

5. Method according to any one of claims 2 to 4, **characterized in that** the tubular core consists of plastic film, preferably of polyamide.

6. Method according to any one of claims 2 to 5, **characterized in that** the tubular core consists of silicone.

7. Method according to any one of claims 2 to 6, **characterized in that** the tubular core is non-stick coated or a release agent at least partially covers its surface.

8. Method according to any one of claims 2 to 7, **characterized in that** the reinforcing fibres are dry carbon fibres.

9. Method according to any one of claims 2 to 8, **characterized in that** the reinforcing fibres are carbon fibres pre-impregnated with matrix resin.

## Revendications

1. Procédé de fabrication de composants raidis à partir d'un matériau composite en fibres, comprenant les étapes suivantes
- fournir un composant (1) à renforcer,
- déposer des fibres de renforcement (2) préformées pour former un élément de renforcement en forme de T sur cette pièce (1) à renforcer,
- fournir deux outils de formage rigides (3, 4) adaptés pour recouvrir les extrémités les plus longues des fibres de renforcement préformées en forme de T (2),
- insérer un noyau tubulaire plié (7) dans les formages rigides (3, 4),
- positionner les outils de formage rigides (3, 4) sur les faces frontales les plus longues des fibres de renforcement préformées en forme de T (2) de telle sorte que le noyau tubulaire plié (7) vienne se placer au-dessus de la face frontale des fibres de renforcement préformées (2) opposée à la pièce (1) à renforcer,
- presser les outils de formage rigides (3, 4) contre les fibres de renforcement préformées (2),
- gonfler le noyau tubulaire (7) de manière à exercer une pression sur la face frontale des fibres de renforcement préformées (2) opposée à la pièce (1) à renforcer,
- consolider les fibres de renforcement.

2. Procédé selon l'une des revendications précédentes, **caractérisé en ce qu'**un matériau durcissable (9) est en outre introduit dans les outils de moulage rigides (3) et (4) entre l'âme du tube (7) et les fibres de renforcement (2).

3. Procédé selon la revendication 2, **caractérisé en ce que** le matériau durcissable (9) sous forme durcie assure une protection contre la corrosion électrolytique.

4. Procédé selon l'une quelconque des revendications 2 à 3, **caractérisé en ce que** le matériau durcissable (9) sous forme durcie présente des propriétés d'indicateur.

5. Procédé selon l'une quelconque des revendications 2 à 4, **caractérisé en ce que** le noyau tubulaire est constitué d'un film plastique, de préférence en polyamide.

6. Procédé selon l'une quelconque des revendications 2 à 5, **caractérisé en ce que** le noyau tubulaire est constitué de silicone.

7. Procédé selon l'une quelconque des revendications 2 à 6, **caractérisé en ce que** le noyau tubulaire est recouvert d'un revêtement anti-adhésif ou qu'un agent de démoulage recouvre au moins partiellement sa surface.

8. Procédé selon l'une quelconque des revendications 2 à 7, **caractérisé en ce que** les fibres de renforcement sont des fibres de carbone sèches.

9. Procédé selon l'une quelconque des revendications 2 à 8, **caractérisé en ce que** les fibres de renforcement sont des fibres de carbone pré-imprégnées de résine de matrice.
